# EUROPÄISCHE PATENTANMELDUNG

(11) **EP 3 076 203 A1**
(43) Veröffentlichungstag der Anmeldung: **05.10.2016**
(21) Anmeldenummer: 16162951.4
(22) Anmeldetag: 30.03.2016
(51) Int. Cl.: G01S 17/48, G01S 17/58, G01S 7/481

(54) **VERFAHREN ZUM BETRIEB EINES ENTFERNUNGSMESSENDEN OPTISCHEN TASTERS UND ENTFERNUNGSMESSENDER OPTISCHER TASTER**

(30) Priorität: 02.04.2015 DE 102015105150
(71) Anmelder: SICK AG, 79183 Waldkirch/Breisgau (DE)
(72) Erfinder: Hörsch, Ingolf, 79102 Freiburg (DE); Merettig, Gerhard, 79350 Sexau (DE); Bergbach, Roland, 79364 Malterdingen (DE)
(74) Vertreter: Manitz, Finsterwald & Partner GbR

(57) **Zusammenfassung**

Die Erfindung betrifft ein Verfahren zum Betrieb eines nach dem Triangulationsprinzip arbeitenden optischen Tasters, der wenigstens eine Leuchtdioden- oder Halbleiterlaser-Lichtquelle zum Aussenden von Sendelicht durch eine Sendeapertur in einen Überwachungsraum aufweist, wobei die Lichtquelle einen Halbleiterkristall mit einer Vielzahl von individuell ansteuerbaren, in einem lateralen Muster angeordnete Lichtquellensegmente umfasst. Der Taster weist weiterhin wenigstens einen Lichtempfänger zur Detektion von Empfangssignalen, die den Überwachungsraum verlassen, und eine Steuereinrichtung auf, die mit dem wenigstens einen Lichtempfänger und mit der Vielzahl von Lichtquellensegmenten verbunden ist, um die Lichtquellensegmente oder Gruppe von Lichtquellensegmenten individuell zu ihrem Betrieb anzusteuern und Empfangssignale des Lichtempfängers auszuwerten. Das Verfahren umfasst, dass einzelne Lichtquellensegmente oder Gruppen von Lichtquellensegmenten individuell angesteuert werden und das jeweils resultierende Empfangssignal individuell ausgewertet wird, indem wenigstens zwei Lichtquellensegmente oder Gruppen von Lichtquellensegmenten zeitlich versetzt zueinander zum Betrieb angesteuert werden und das Empfangssignal zeitlich aufgelöst ausgewertet wird, um durch Triangulation wenigstens zwei zeitversetzte Abstandssignale zu erzeugen. Die Erfindung betrifft außerdem einen optischen Taster zur Durchführung eines solchen Verfahrens, dessen Lichtquelle einen Halbleiterkristall mit einer Vielzahl von individuell ansteuerbaren, in einem lateralen Muster angeordnete Lichtquellensegmente umfasst, und der eine Steuereinrichtung aufweist, die derart ausgestaltet ist, ein erfindungsgemäßes Verfahren durchzuführen.

## Beschreibung

Die Erfindung betrifft ein Verfahren zum Betrieb eines entfernungsmessenden optischen Tasters, der eine Lichtquelle zum Aussenden von Sendelicht in einen Überwachungsraum und einen Lichtempfänger zur Detektion von Empfangssignalen aufweist, die den Überwachungsraum verlassen. Die Erfindung betrifft weiterhin einen entfernungsmessenden optischen Taster, mit dem das Verfahren durchgeführt werden kann.

Optoelektronische Sensoren umfassen z.B. Lichtschranken. Hier wird Licht in einen Überwachungsraum gesendet und auf der gegenüberliegenden Seite des Überwachungsraumes von einem Empfänger detektiert. Eine Unterbrechung des Lichtweges führt dazu, dass kein Licht am Empfänger ankommt und so auf ein Objekt im Überwachungsraum geschlossen werden kann. Bei Reflexionslichtschranken befindet sich anstelle des Empfängers ein Reflektor, der das Licht bei ununterbrochenem Strahlengang wieder zurück in Richtung des Senders reflektiert, wo es durch einen entsprechend angeordneten Empfänger detektiert werden kann. Bei einer solchen Anordnung befinden sich also Sender und Empfänger auf der gleichen Seite des Überwachungsraumes.

Mehrere nebeneinander angeordnete Lichtschranken bilden ein Lichtgitter, wodurch ein größerer räumlicher Bereich überwacht werden kann.

Andere optoelektronische Sensoren umfassen optische Lichttaster, die z.B. zur Entfernungsmessung geeignet sind. Wird Licht aus dem Überwachungsraum zurückreflektiert, so kann auf die Anwesenheit eines Objektes und z.B. aus der Lichtlaufzeit auf dessen Entfernung geschlossen werden. Bei sogenannten Triangulationstastern befinden sich Sender und Empfänger in einem räumlichen Abstand zueinander auf derselben Seite des Überwachungsraumes. Je nach Entfernung des reflektierenden Objekts im Überwachungsraum trifft reflektiertes Licht an einer unterschiedlichen Stelle auf den Lichtempfänger. Aus der Lage eines reflektierten Lichtpunktes auf dem Empfänger lässt sich in an sich bekannter Weise die Entfernung des Objektes nach dem geometrischen Triangulationsprinzip bestimmen.

Ein Triangulationstaster mit mehreren auf einem Halbleiterkristall angeordneten Lichtquellen ist in DE 10 2010 038 186 A1 beschrieben.

Aufgabe der vorliegenden Erfindung ist es, ein Verfahren zum Betrieb eines entfernungsmessenden optischen Tasters und einen nach dem Triangulationsprinzip arbeitenden entfernungsmessenden optischen Taster anzugeben, die eine äußerst kompakte und kostengünstige Ausgestaltung und trotzdem einen sicheren und zuverlässigen Betrieb ermöglichen.

Diese Aufgabe wird mit einem Verfahren zum Betrieb eines entfernungsmessenden optischen Tasters mit den Merkmalen des Anspruchs 1 bzw. einem nach dem Triangulationsprinzip arbeitenden entfernungsmessenden optischen Taster mit den Merkmalen des Anspruchs 5 gelöst. Unteransprüche sind auf bevorzugte Ausgestaltungen und Ausführungsformen gerichtet.

Bei einem erfindungsgemäßen Verfahren kommt eine spezielle Leuchtdiodenoder Halbleiterlaser-Lichtquelle zum Einsatz, die Sendelicht durch eine Sendeapertur in den Überwachungsraum sendet. Die erfindungsgemäß zum Einsatz kommende Lichtquelle weist einen Halbleiterkristall mit einer Vielzahl von individuell ansteuerbaren, in einem lateralen Muster angeordneten Lichtquellensegmenten auf. Eine derartige "Multi-Pixel-Leuchtdiode" weist also mehrere Licht emittierende Segmente auf. Die Ansteuerung der einzelnen Licht emittierenden Segmente (im Folgenden auch Lichtquellensegmente) erfolgt durch eine entsprechend strukturierte Elektrode in dem Halbleiterkristall. Der Leuchtmechanismus entspricht dabei dem physikalischen Prinzip einer Leuchtdiode oder eines oberflächenemittierenden Halbleiterlasers (z.B. eines VCSEL, Vertical Cavity Surface Emitting Laser).

Die Verwendung einer solchen Halbleiterleuchtdiodenstruktur ermöglicht die Durchführung des erfindungsgemäßen Verfahrens mit einem sehr kompakten Aufbau und ermöglicht trotzdem eine räumlich modulierte und bei entsprechender Ansteuerung auch zeitlich modulierte Ansteuerung einzelner Lichtquellensegmente, wobei ein einzelner Kristall diese Funktionen erfüllen kann.

Das erfindungsgemäße Verfahren umfasst dabei, dass einzelne der Lichtquellensegmente oder Gruppen solcher Lichtquellensegmente individuell angesteuert werden und das jeweils resultierende Empfangssignal individuell ausgewertet wird. Die individuelle Auswertung der Empfangssignale in Abhängigkeit des jeweils gerade zum Betrieb angesteuerten Lichtquellensegments ermöglicht eine sehr präzise Überwachung. Das erfindungsgemäße Verfahren ist so ausgestaltet, dass einzelne Lichtquellensegmente zeitlich versetzt zueinander zum Betrieb angesteuert werden.

Mittels einer Ansteuerungslogik werden z.B. die unterschiedlichen Lichtquellensegmente der Multi-Pixel-LED nach einer festgelegten Reihenfolge sequentiell angesteuert und auf ein zu detektierendes Objekt im Überwachungsraum projiziert. Durch Triangulation werden hieraus Abstandssignale generiert, wobei jedem der angesteuerten Lichtquellensegmente oder Gruppen von Lichtquellensegmenten individuelle Signale zuordenbar sind. Auf diese Weise wird ein einfaches lokales Abstandsprofil des erfassten Objektbereiches generiert.

Geeignete logische oder analoge Verknüpfung dieser so erhältlichen zweidimensionalen Abstandsinformationen kann zu einer robusten und präzisen Objekterkennung genutzt werden.

Durch die Verwendung der präzisen und genau ansteuerbaren Multi-Pixel-LED ist es außerdem möglich, sehr genau den Detektionsraum festzulegen, in dem ein Triangulationsverfahren mit Hintergrund- bzw. Vordergrundausblendung verwendet wird.

Durch die erfindungsgemäße Verwendung der Multi-Pixel-LED, deren Lichtquellensegmente einzeln ansteuerbar sind, ist es insbesondere möglich, zwei durch Triangulation erzeugte Abstandssignale zu generieren, so dass in den Lichtstrahl einfahrende Objekte nicht durch Teilabdeckung des durch den Lichtstrahl erzeugten Spots entweder zu einem irrtümlichen Einschalten beim Ausfahren des Objektes aus dem Spot noch zu einem irrtümlichen Ausschalten beim Einfahren des Objektes in den Spot führen. Dazu ist es insbesondere z.B. denkbar, dass eine zeitversetzte Ansteuerung von mindestens einem weiter oben liegenden Lichtquellensegment und danach mindestens einem weiter unten liegenden Lichtquellensegment vorgesehen ist, um die angesprochenen zwei Abstandssignale zu generieren, so dass (hier zum Beispiel von oben oder unten) in den Strahl einfahrende Objekte keine Fehldetektion auf Grund einer wie oben besprochenen Teilabdeckung des Lichtspots hervorrufen.

Dies ermöglicht also die robuste Erkennung von Objekten, die parallel zur Triangulationsrichtung in den Detektionsstrahl einfahren und insofern den Lichtspot anschneiden.

Aus dem mit der erfindungsgemäß zum Einsatz kommenden Multi-Pixel-LED erfassten Daten und einem damit wie oben beschrieben erzeugten Abstandsprofil ist es außerdem möglich, ein Schaltsignal zu generieren, das z.B. auf Grund geeigneter Filterung der Einzelsignale (z.B. Medianfilterung, Minimum- oder Maximumbildung) bestimmte störende Signale wegfiltert (z.B. sehr hohe oder sehr niedrige energetische Signale von glänzenden Objektoberflächenbereichen). Auf diese Weise lässt sich die Robustheit und Präzision des Abstandssignals z.B. bei der Detektion glänzender Objekte deutlich erhöhen.

Zusätzlich ist es beispielsweise möglich, bei dem erfindungsgemäßen Verfahren eine Bestimmung der Bewegungsrichtung und der Bewegungsgeschwindigkeit eines im Überwachungsraum befindlichen Objekts durchzuführen und festzustellen, ob sich ein Objekt überhaupt bewegt. Diese Informationen werden im Folgenden auch unter dem Begriff "Bewegungsparameter" zusammengefasst.

Wenn sich zusätzlich ein Empfänger z.B. auf der der Sendelichtquelle gegenüberliegenden Seite des Überwachungsraumes befindet, so kann auch aus der zeitlichen Reihenfolge der Ansteuerung der einzelnen räumlich versetzt zueinander angeordneten Lichtquellensegmente auf die Bewegungsrichtung oder die Bewegungsgeschwindigkeit des Objektes geschlossen werden, indem ausgewertet wird, wann an dem gegenüberliegenden Empfänger Licht ankommt oder nicht. Andererseits kann z.B. bei einer Reflexionsgeometrie ausgewertet werden, wann am Empfänger Licht ankommt.

Wenn das Licht unterschiedlicher Lichtquellensegmente, die zeitversetzt angesteuert werden, zu unterschiedlichen Zeitpunkten unterbrochen bzw. reflektiert wird, lässt sich auch auf einfache Weise feststellen, ob sich ein Objekt bewegt. Diese Information kann dann zum Beispiel als digitales Signal ("Objekt bewegt sich"/"Objekt bewegt sich nicht") verwertet werden.

Unter Berücksichtigung des zeitlichen Verlaufs der Ansteuerung der einzelnen Lichtquellensegmente kann durch die individuelle Auswertung der Empfangssignale zu den jeweiligen Zeitpunkten auch darauf geschlossen werden, wann sich das Objekt an welcher Stelle im Überwachungsraum befindet.

Eine andere Möglichkeit der Bestimmung der Bewegungsparameter eines Objekts ist gegeben, wenn als Empfänger ein positionssensitives Fotoelement eingesetzt wird. Dabei kann es sich z.B. um ein CCD-(Charged Coupled Device)-Array, um ein PSD-(Position Sensitive Device)-Element oder ein CMOS-Array handeln.

Hier ist es möglich, den räumlichen Auftreffpunkt von Licht auf den Empfänger sehr genau festzustellen. Bei Kenntnis des gerade zum Betrieb angesteuerten Lichtquellensegmentes lässt sich auf die genaue Position des Objektes im Überwachungsraum zurückschließen.

Ebenso kann bei einer solchen Ausgestaltung des Empfängerelements auch eine vorbestimmte Auswahl von Lichtquellensegmenten gleichzeitig zum Betrieb angesteuert werden. Je nachdem, welche Lichtquellensegmente von dem sich durch den Überwachungsraum bewegenden Objekt beeinflusst werden, werden unterschiedliche Bereiche des ortsauflösenden Lichtempfängers beeinflusst, so dass auch hier auf die Bewegungsparameter geschlossen werden kann.

Durch die besonders einfache und präzise Ausgestaltung eines erfindungsgemäß zum Einsatz kommenden Multi-Pixel-LED-Elements lassen sich derartige Verfahren auch mit einer sehr kompakten Anordnung höchst präzise durchführen.

Wie beschrieben, sieht das erfindungsgemäße Verfahren vor, dass die einzelnen Lichtquellensegmente oder Gruppen von Lichtquellensegmenten zeitlich versetzt zueinander angesteuert werden. Auf diese Weise entsteht eine räumliche Auflösung, wenn bekannt ist, welche Lichtquellensegmente welchen Bereich des Überwachungsraumes beleuchten. Auf diese Weise ist es möglich, z.B. einzelne Strukturen an einem sich im Überwachungsraum befindenden oder bewegenden Objektes aufzulösen, wie insbesondere z.B. Kanten, Bohrungen, Falze, Rundungen oder Reflexionssprünge.

Die erfindungsgemäße Verwendung einer Multi-Pixel-LED ermöglicht außerdem z.B. eine sehr präzise und einfache Vorauswahl. So kann z.B. während eines Einstellmodus vorgesehen sein, dass die Lichtquellensegmente nacheinander angesteuert werden und das Empfangssignal am Lichtempfänger auf seine Stärke hin ausgewertet wird. Während des Betriebsmodus werden dann nur diejenigen Lichtquellensegmente angesteuert, bei denen das Empfangssignal während des Einstellmodus eine gewünschte Eigenschaft aufweist, also z.B. oberhalb einer festgelegten Schwelle liegt. Eine solche Auswertung lässt sich mit einer entsprechend ausgestalteten Steuereinrichtung auch auf sehr vorteilhafte Art und Weise automatisiert durchführen.

Die Erfindung betrifft außerdem einen nach dem Triangulationsprinzip arbeitenden optischen Taster, der zur Durchführung des erfindungsgemäßen Verfahrens geeignet ist. Dazu kann der erfindungsgemäße optische Taster insbesondere eine Steuereinrichtung aufweisen, die derart ausgestaltet ist, ein entsprechendes Verfahren durchzuführen. Die Ausgestaltung als optischer Taster ermöglicht die genaue Beobachtung eines Überwachungsraumes mit der kompakten Anordnung, die auf der Verwendung einer Multi-Pixel-LED beruht.

Die einzelnen Lichtquellensegmente des erfindungsgemäßen optischen Tasters können z.B. jeweils Einzelleuchtdiodenstrukturen aufweisen, die in einer gewünschten lateralen Abstrahlform angeordnet sind. Dabei werden solche Einzelleuchtdiodenstrukturen z.B. durch entsprechend in einer Halbleiterlaserschichtstruktur geätzte räumliche Strukturen, epitaktisch aufgewachsene Strukturen oder z.B. sogenannte "Nanowires" gebildet. Die räumliche Anordnung dieser einzelnen Einzelleuchtdiodenstrukturen bildet dann eine laterale Abstrahlform.

Bei einer anderen Ausgestaltung ist die laterale Abstrahlform der einzelnen Lichtquellensegmente durch die laterale Form der einzelnen Leuchtdiodenstrukturen selbst vorgegeben. So kann z.B. in oder auf einer Halbleiterleuchtdiodenschichtstruktur eine solche geometrische Form durch einen lithographischen Prozess gebildet sein, die der gewünschten lateralen Abstrahlform des jeweiligen Lichtquellensegments entspricht.

Die bei dem erfindungsgemäßen Verfahren bzw. bei dem erfindungsgemäßen optischen Taster zum Einsatz kommende individuelle Ansteuerbarkeit der einzelnen Lichtquellensegmente ermöglicht auch noch zusätzliche Anwendungsmodi, die mit dem erfindungsgemäßen Verfahren und bei der optimalen Anwendbarkeit des erfindungsgemäßen optischen Tasters in vorteilhafter Weise zusammenwirken.

So ist es z.B. möglich, dass durch Auswahl einzelner Lichtquellensegmente eine besonders günstige oder gewünschte Strahlquerschnittsform festgelegt wird, die an die gewünschte Anwendung optimal angepasst ist.

Außerdem ist z.B. denkbar, dass durch Auswahl der entsprechenden Anzahl der abstrahlenden Lichtquellensegmente der Querschnitt des ausgesendeten Lichtstrahls auch in seiner Größe optimal an die zu erwartenden Objekte angepasst wird.

Schließlich ist es auch möglich, dass die laterale Querschnittsform des abgestrahlten Sendelichts an eine Kontraststruktur an einem zu erwartenden Objekt angepasst ist, die darauf z.B. als Erkennungszeichen aufgebracht ist. Dazu werden entsprechende Lichtquellensegmente der Multi-Pixel-LED ausgewählt, die dieses Muster auf das Objekt projizieren.

Ebenso ist es möglich, dass die laterale Abstrahlform der Lichtquellensegmente so ausgewählt wird, dass zu erwartende Strukturen in dem zu detektierenden Objekt (also z.B. Kanten oder starke Modulationen der Reflexionseigenschaften) optimal erfasst werden, indem z.B. eine in einer Richtung stark ausgedehnte laterale Querschnittsform des ausgesendeten Lichtes gewählt wird, die senkrecht zu einer erwarteten Kante oder eines Sprungs in der Reflektivität angeordnet ist.

Schließlich können auch solche Lichtquellensegmente vom Betrieb ausgenommen werden, deren Licht auf Gegenstände fällt, die sich bewusst und in Kenntnis des Benutzers im Überwachungsraum befinden und insofern zu keiner Fehldetektion führen sollen.

Besonders vorteilhaft ist, wenn eine derartige Multi-Pixel-LED zum Einsatz kommt, bei der die einzelnen Lichtquellensegmente sich eine gemeinsame Sendeoptik teilen, die bevorzugterweise auch die Sendeapertur darstellt. Diese Sendeoptik ist z.B. eine Sendelinse. Dies ist insbesondere unter Berücksichtigung der besonders kompakten Anordnung des erfindungsgemäßen optischen Tasters wünschenswert, weil dann nur eine einzelne Sendeoptik notwendig ist, die gegebenenfalls sogar bei entsprechenden Prozesstechniken auf dem Halbleiterkristall selbst realisiert werden kann, der die Sendelichtquelle bildet.

Die Erfindung wird anhand der beiliegenden schematischen (nicht maßstabsgetreuen) Figuren im Detail erläutert (gleiche Bezugsziffern bezeichnen in den Figuren jeweils gleichartige Elemente). Es zeigen:
- Fig. 1: eine mögliche Anordnung und Form von Lichtquellensegmenten einer bei einem erfindungsgemäßen optischen Taster bzw. bei einem erfindungsgemäßen optoelektronischen Verfahren zum Einsatz kommenden Lichtquelle,
- Fig. 2: eine andere Anordnung bzw. Ausgestaltung der Lichtquellensegmente,
- Fig. 3: eine schematische Anordnung optischen Tasters im Betrieb,
- Fig. 4: in kombinierter Darstellung im oberen Teil der Fig. 4 Signalverläufe, die sich bei der im unteren Teil der Fig. 4 perspektivisch dargestellten Bewegung eines Objektes bei der Anordnung der Fig. 3 ergeben können, und
- Fig. 5: eine schematische Anordnung eines erfindungsgemäßen optischen Tasters im Betrieb bzw. bei der Anwendung in einem erfindungsgemäßen Verfahren.

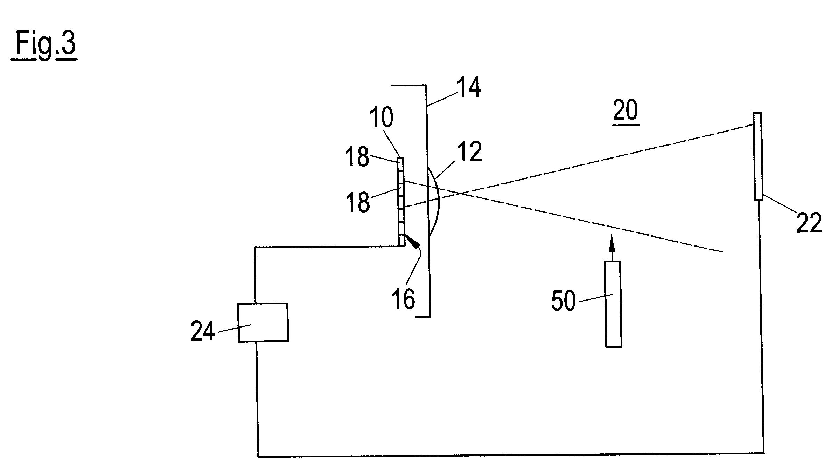

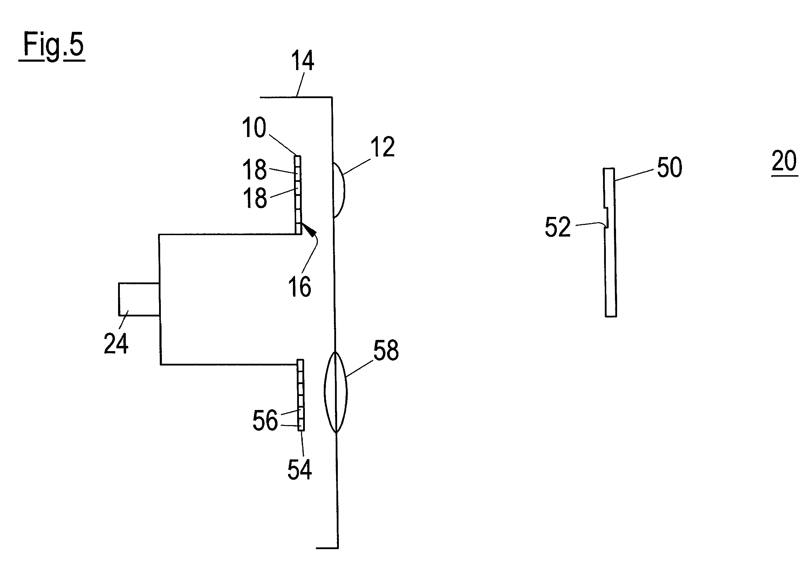

Fig. 3 und 5 zeigen mögliche Anordnungen eines optoelektronischen Sensors. Dabei zeigt Fig. 3 zur ergänzenden Erläuterung in schematischer Darstellung einen Transmissionslichttaster, während Fig. 5 einen erfindungsgemäßen Triangulationslichttaster darstellt.

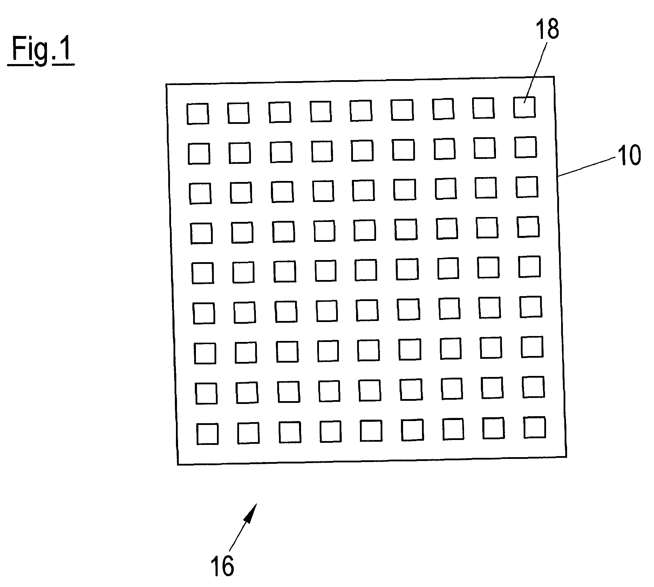

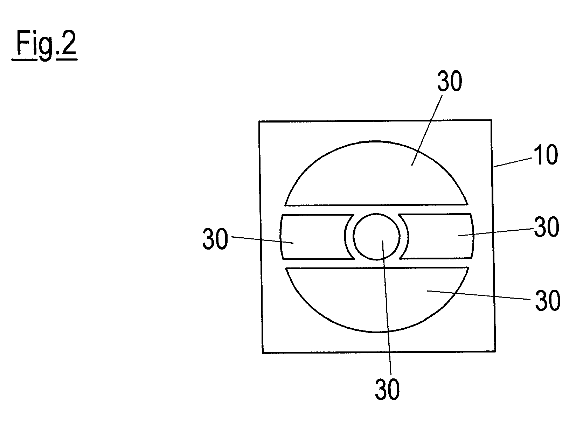

In Fig. 3 erkennt man eine Sendelichtquelle 10, die einzelne Segmente aufweist, die mit Hilfe der Fig. 1 und 2 noch im Detail erläutert werden. Die Sendelichtquelle sendet Licht durch eine Sendelinse 12, die auch als Apertur wirkt. Diese Anordnung ist in einem nur angedeuteten Gehäuse 14 aufgenommen.

Bezugsziffer 16 bezeichnet hier eine Draufsicht auf die Sendelichtquelle 10 aus Richtung der Linse 12. Diese Draufsicht ist in Fig. 1 gezeigt. Man erkennt hier unterschiedliche Sendesegmente 18. Das Sendelicht der Sendelichtquelle 10 (Fig. 5) tritt in einen Überwachungsraum 20 ein, der auf seiner gegenüberliegenden Seite durch einen Empfänger 22 begrenzt wird. Bei der Sendelichtquelle 10 handelt es sich um eine Halbleiterleuchtdiodenstruktur. Die Sendelichtquelle 10 ist dabei durch einen einzigen Kristall gebildet. Auf diesem Kristall befinden sich einzelne Segmente 18, deren Form z.B. wiederrum in Fig. 1 erkennbar ist. Es handelt sich hierbei um einzelne Segmente, die bei der Ausgestaltung der Fig. 1 Quadrate oder Rechtecke bilden, die nebeneinander in dem Abstand einiger Mikrometer angeordnet sind. Die einzelnen Lichtquellensegmente werden dabei durch entsprechend lateral ausgeformte Bereiche eines Halbleiterkristalls gebildet. Im Fall der Fig. 1 handelt es sich dabei um entsprechend beabstandet ausgebildete, lithographisch hergestellte quadratische Leuchtdiodensegmente 18.

Die einzelnen Segmente umfassen bei dem beschriebenen Beispiel Quadrate z.B. in der Größenordnung von 100 x 100 µm oder anderen Formen in dieser Größenordnung. Der Abstand zwischen den einzelnen Lichtsegmenten 18 beträgt z.B. 20 µm.

Die einzelnen Segmente 18 sind individuell ansteuerbar - ähnlich der Auslesegeometrie eines CCD-Bildsensors - durch Spaltenselektionsleitungen und Zeilenselektionsleitungen. Sowohl der Empfänger 22 als auch die Sendelichtquelle 10 sind mit einer Steuereinrichtung 24 verbunden, die nur schematisch dargestellt ist und zum einen zur Auswahl der im Betrieb anzusteuernden Lichtquellenelemente 18 dient.

Die Steuereinrichtung 24 ist außerdem mit dem Empfangselement 22 verbunden, das z.B. eine Fotodiode oder ein entsprechendes CCD-Array aufweist. Sie übernimmt hier auch die Auswertung der Empfangssignale und gegebenenfalls die Ausgabe daraus sich als notwendig ergebender Steuersignale.

Der Betrieb einer derartigen sehr einfachen Anordnung ist wie folgt:
In einem Einstellmodus wird zunächst ausgewählt, welche Lichtquellensegmente 18 während des Betriebes der in Fig. 3 gezeigten Lichtschranke zum Einsatz kommen sollen. Dazu werden von der Steuereinrichtung 24 die einzelnen Lichtquellensegmente 18 zeitlich versetzt zueinander angesteuert und das resultierende Signal an der Empfangseinheit 22 detektiert. Auf diese Weise ist feststellbar, beim Betrieb welcher Lichtquellensegmente 18 an der Empfängereinheit 22 ein Signal ankommt, das über einer gewünschten vorgegebenen Schwelle liegt. Im Betrieb, bei der die Lichtschranke der Fig. 3 zum Einsatz kommt, werden dann nur diejenigen Lichtquellensegmente 18 angesteuert, bei denen dieser Schwellwert überschritten wird.

Während des Betriebes können einzelne Lichtquellenelemente einzeln angesteuert werden. Bei einem sich z.B. in den Überwachungsraum 20 hinein bewegenden Objekt 50 werden die Lichtstrahlen der einzelnen Lichtquellensegmente 18 zu unterschiedlichen Zeitpunkten unterbrochen. Insofern kommt am Lichtempfänger 22 das Licht in zeitlich modulierter Form an, woraus auf die Bewegung des Objekts 50 geschlossen werden kann. Auf diese Weise ist eine Bewegungs-, Richtungs- und Geschwindigkeitsabschätzung möglich.

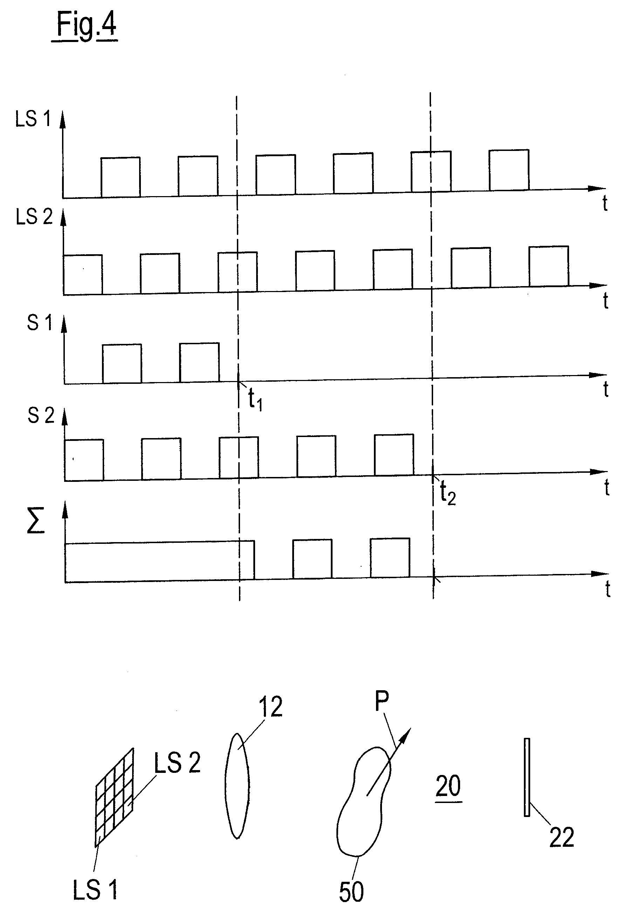

Verbessert werden kann eine solche Auswertung noch dadurch, dass die einzelnen ausgewählten Segmente 18 zeitlich moduliert angesteuert werden. Eine entsprechende Modulation lässt sich dann auch auf dem Empfänger 22 nachweisen, (wenn das jeweilige Licht nicht durch ein Objekt 50 unterbrochen wird). Wenn die einzelnen Modulationen an den einzelnen Lichtquellensegmenten 18 unterschiedlich sind oder z.B. zeitlich gegeneinander versetzt, lässt sich auf diese Weise sehr deutlich feststellen, welches Lichtquellensegment gerade Licht aussendet, um so eine genauere Bewegungsanalyse des Objekts 50 durchführen zu können. Schematisch ist eine solche Auswertung in Fig. 4 gezeigt. Im unteren Teil der Fig. 4 ist zunächst die Lichtquelle 10 schematisch dargestellt. Zwei ausgewählte Lichtquellensegmente sind hier mit LS1 und LS2 bezeichnet. Licht von diesen Lichtquellensegmenten wird durch die Sendeapertur 12 in Richtung des Überwachungsraumes 20 gesendet. Befindet sich nichts im Strahlengang, so wird das Empfängerelement 22 Lichtstrahlen der Lichtquellensegmente LS1 und LS2 empfangen. Im oberen Teil der Fig. 4 sind die Signalverläufe gezeigt, die bei der Detektion eines sich in Richtung des Pfeiles P bewegenden Objekts 50 im Überwachungsraum 20 ergeben. Das Lichtquellensegment LS1 wird zeitlich abhängig angesteuert, wie es im obersten Diagramm der Fig. 4 gegen die Zeit t aufgetragen ist (an der Vertikalachse ist das ausgesendete Signal abgetragen, dass hier der Einfachheit halber entsprechend dem verwendeten Lichtquellensegment mit "LS1" bezeichnet ist).

Zeitlich genau demgegenüber versetzt wird das Lichtquellensegment LS2 angesteuert, wie es im zweiten Diagramm im oberen Teil der Fig. 4 sichtbar ist. An der Vertikalachse ist wiederum das ausgesendete Signal abgetragen, dass hier der Einfachheit halber entsprechend dem verwendeten Lichtquellensegment mit "LS2" bezeichnet ist.

Aus den jeweiligen zeitlichen Verläufen ist also eine eindeutige Identifikation der Lichtquellensegmente LS1 und LS2 möglich.

Im dritten Diagramm im oberen Teil der Fig. 4 ist der am Empfänger empfangene Signalverlauf S1 ablesbar, der vom Betrieb des Lichtquellensegments LS1 herrührt. Solange sich das Objekt 50 noch nicht im Strahlengang des Lichtquellensegments LS1 befindet, werden vom Empfänger 22 auch entsprechende Lichtpulse als Signal S1 registriert, die genau dann anfallen, wenn das Lichtquellensegment LS1 in Betrieb ist. Tritt das Objekt 50 in den Strahlengang des Lichtquellensegments LS1 ein, werden die Signale abgedeckt und es kommt von dem Lichtquellensegment LS1 keine Strahlung mehr beim Empfänger an.

Bei der gezeigten Anordnung und der Bewegungsrichtung des Objekts 50 wird der Strahlengang des Lichtquellensegments LS2 erst zu einem späteren Zeitpunkt unterbrochen, wenn das Objekt 50 bereits weiter fortgeschritten ist. Insofern wird das Signal S2, das am Empfänger 22 ausgelöst durch die Beleuchtung durch das Lichtquellensegment LS2 ankommt, erst später durch das Objekt 50 ausgeblendet.

Am Empfänger 22 wird dementsprechend ein Summensignal ∑ detektiert, das im fünften Diagramm des oberen Teils der Fig. 4 gezeigt ist. Aus diesem Diagramm lässt sich dann ablesen, dass bis zum Zeitpunkt t1 noch beide Lichtquellensegmente LS1, LS2 Licht aussenden, das auch am Empfänger 22 ankommt. Ab dem Zeitpunkt t1 sei das Licht des Lichtquellensegments LS1 durch das Objekt 50 abgedeckt, so dass während dessen weiterem Betrieb kein Licht mehr vom Lichtquellensegment LS1 am Empfänger 22 ankommt. Das Summensignal ∑ entspricht daher nur noch dem Licht, dass vom Betrieb des Lichtquellensegments LS2 herrührt. Beim Zeitpunkt t2 sei nun auch das Lichtquellensegment LS2 durch das Objekt 50 abgeschattet. Dies ist in dem Summensignal ∑ abzulesen, so dass aus dem zeitlichen Verlauf auf die Bewegung und die Geschwindigkeit, etc. des Objekts 50 zurückgeschlossen werden kann.

Selbstverständlich ist diese Schilderung nur schematisch und betrifft nur ein einfaches Beispiel. Durch eine entsprechende engere Modulation der einzelnen Signale der Lichtquellensegmente bzw. durch eine Verwendung von sehr viel mehr Lichtquellensegmenten (gegebenenfalls auch in zwei Dimensionen über die Lichtquelle verteilt) ist eine deutlich genauere und präzisere Bestimmung der Bewegungsparameter möglich, als es hier für das grobe Beispiel mit nur zwei Lichtquellensegmenten LS1 und LS2 geschildert ist.

Eine erfindungsgemäße Anwendung ist in Fig. 5 dargestellt. Es handelt sich dabei um die schematische Darstellung eines Triangulationstasters. Licht der Lichtquelle 10 bzw. einzelnen ausgewählten Lichtquellensegmenten 18 fällt durch die als Linse ausgestaltete Sendeapertur 12 in den Überwachungsraum 20. Ein Objekt 50, das sich im Überwachungsraum befindet, reflektiert das Licht zurück und zwar unter anderem durch die Empfängerlinse 58, die die Empfangsapertur bildet. Je nach Entfernung des Objekts 50 fällt dieses Licht auf unterschiedliche Empfangselemente des Empfängers 54, so dass nach dem geometrischen Prinzip der Triangulation auf die Entfernung des Objekts 50 von der Sensoranordnung geschlossen werden kann. Das Empfängerelement 54 weist hier einzelne Fotodioden 56 in einer Linienanordnung auf, die eine örtliche Auflösung in einer Richtung parallel zu der Anordnung der Fotodioden 56 ermöglicht.

Durch geeignete Auswahl der Lichtquellensegmente 18 lässt sich z.B. durch Auswertung eines Empfangssignals, das beim Betrieb unterschiedlicher Lichtquellensegmente 18 erzeugt wird, insofern auf ein Abstandsprofil schließen. So lassen sich z.B. Kanten oder Vertiefungen oder ähnliches, wie sie schematisch in Fig. 5 mit 52 bezeichnet ist, detektieren.

Ebenso wie in der Transmissionsgeometrie der Fig. 3 bzw. der Fig. 4 lässt sich auch bei einer Triangulationsanordnung der Fig. 5 die Bewegung des Objekts 50 im Überwachungsraum 20 detektieren, indem festgestellt wird, welches Lichtquellensegment 18 gerade in Betrieb ist und ausgewertet wird, ob zu dem jeweiligen Zeitpunkt gerade Licht am Empfänger 54 ankommt.

Durch die erfindungsgemäße Verwendung der Multi-Pixel-LED ist eine solche Ansteuerung und Auswertung auch bei einer kompakten und einfachen Anordnung sicher und einfach durchzuführen.

Fig. 2 zeigt eine andere Anordnung von möglichen Lichtquellensegmenten 30 auf dem Halbleiterkristall 10, der die Lichtquelle darstellt. Hier sind unterschiedlich geformte Lichtquellensegmente 30 erkennbar, deren Form und Anordnung an die individuelle Geometrie angepasst sein können.

Die einzelnen Lichtquellensegmente sind bei den hier beschriebenen Ausführungen durch entsprechend lateral strukturierte Bereiche der Halbleiterleuchtdiodenkristallstruktur gebildet. Alternativ ist es auch möglich, dass die einzelnen Lichtquellensegmente durch jeweils mehrere Einzelleuchtdiodenstrukturen gebildet werden, die in der entsprechenden Form nebeneinander auf dem Halbleiterkristall lithographisch erzeugt worden sind.

Bei der Halbleiterleuchtdiodenstruktur kann es sich jeweils z.B. eine Leuchtdiodenschichtstruktur oder z.B. um eine Halbleiterlaserschichtstruktur (z.B. einem VCSEL (Vertical Cavity Surface Emitting Laser)) handeln.

### Bezugszeichenliste

- 10: Sendelichtquelle
- 12: Sendelinse
- 14: Gehäuse
- 16: Draufsicht auf die Sendelichtquelle 10 aus Richtung der Sendelinse 12
- 18: Lichtquellensegment
- 20: Überwachungsraum
- 22: Lichtempfänger
- 24: Steuereinrichtung
- 30: Lichtquellensegment
- 50: Objekt
- 52: Kante
- 54: Empfänger
- 56: Fotodiode
- 58: Empfängerlinse

- P: Bewegungsrichtung

## Patentansprüche

1. Verfahren zum Betrieb eines entfernungsmessenden optischen Tasters, der nach dem Triangulationsprinzip arbeitet und folgendes aufweist:
- wenigstens eine Leuchtdioden- oder Halbleiterlaser-Lichtquelle (10) zum Aussenden von Sendelicht durch eine Sendeapertur in einen Überwachungsraum (20),
wobei die Lichtquelle (10) einen Halbleiterkristall mit einer Vielzahl von individuell ansteuerbaren, in einem lateralen Muster angeordneten Lichtquellensegmenten (18, 30) umfasst,
- wenigstens einen Lichtempfänger (22, 54) zur Detektion von Empfangssignalen, die den Überwachungsraum (20) verlassen, und
- eine Steuereinrichtung (24), die mit dem wenigstens einen Lichtempfänger (22, 54) und mit der Vielzahl von Lichtquellensegmenten (18, 30) verbunden ist, um die Lichtquellensegmente (18, 30) oder Gruppen von Lichtquellensegmenten individuell zu ihrem Betrieb anzusteuern und Empfangssignale des Lichtempfängers (22, 54) auszuwerten,
wobei das Verfahren umfasst, dass einzelne Lichtquellensegmente (18, 30) oder Gruppen von Lichtquellensegmenten individuell angesteuert werden und das jeweils resultierende Empfangssignal individuell ausgewertet wird, indem wenigstens zwei Lichtquellensegmente (18, 30) oder Gruppen von Lichtquellensegmenten zeitlich versetzt zueinander zum Betrieb angesteuert werden und das Empfangssignal zeitlich aufgelöst ausgewertet wird, um durch Triangulation wenigstens zwei zeitversetzte Abstandssignale zu erzeugen.

2. Verfahren nach Anspruch 1, **dadurch gekennzeichnet, dass** aus den zeitlich aufgelösten Empfangssignalen eine Information über die Bewegungsrichtung oder die Bewegungsgeschwindigkeit eines sich im Überwachungsraum befindlichen Objektes (50) abgeleitet wird, das den Lichtweg des von dem jeweiligen Lichtquellensegment (18, 30) ausgesendeten Lichtes entweder unterbricht oder es reflektiert.

3. Verfahren nach Anspruch 1, **dadurch gekennzeichnet, dass** die individuelle Auswertung der einzelnen Empfangssignale dadurch geschieht, dass ein räumlich auflösender Lichtempfänger eingesetzt wird, wobei durch die räumliche Auflösung des Lichtempfängers auf das Lichtquellensegment (18, 30) oder die Gruppe von Lichtquellensegmenten zurückgeschlossen wird, das gerade Sendelicht aussendet.

4. Verfahren nach einem der vorhergehenden Ansprüche, wobei zunächst in einem Einstellmodus die Lichtquellensegmente (18, 30) nacheinander angesteuert und das dabei erhaltene Empfangssignal jeweils auf seine Stärke hin auswertet wird und in einem Betriebsmodus diejenigen Lichtquellensegmente (18, 30) angesteuert werden, bei denen das Empfangssignal während des Einstellmodus eine gewünschte Eigenschaft aufweist.

5. Entfernungsmessender optischer Taster, der nach dem Triangulationsprinzip arbeitet und folgendes aufweist:
- wenigstens eine Leuchtdioden- oder Halbleiterlaser-Lichtquelle (10) zum Aussenden von Sendelicht durch eine Sendeapertur in einen Überwachungsraum (20),
wobei die Lichtquelle (10) einen Halbleiterkristall mit einer Vielzahl von individuell ansteuerbaren, in einem lateralen Muster angeordneten Lichtquellensegmenten (18, 30) umfasst,
- wenigstens einen Lichtempfänger (22, 54) zur Detektion von Empfangssignalen, die den Überwachungsraum (20) verlassen, und
- eine Steuereinrichtung (24), die mit dem wenigstens einen Lichtempfänger (22, 54) und mit der Vielzahl von Lichtquellensegmenten (18, 30) verbunden ist, um die Lichtquellensegmente (18, 30) oder Gruppen von Lichtquellensegmenten individuell zu ihrem Betrieb anzusteuern und Empfangssignale des Lichtempfängers (22, 54) auszuwerten,
wobei die Steuereinrichtung (24) derart ausgestaltet ist, ein Verfahren nach einem der vorhergehenden Ansprüche durchzuführen.

6. Optischer Taster nach Anspruch 5, **dadurch gekennzeichnet, dass** die Lichtquellensegmente (18, 30) jeweils durch eine Einzelleuchtdiodenstruktur mit einer gewünschten lateralen Abstrahlform gebildet sind.

7. Optischer Taster nach Anspruch 5, **dadurch gekennzeichnet, dass** die Lichtquellensegmente jeweils mehrere in einer gewünschten lateralen Abstrahlform angeordnete Einzelleuchtdiodenstrukturen umfasst.

8. Optischer Taster nach einem der Ansprüche 5 bis 7, **dadurch gekennzeichnet, dass** der Lichtempfänger (22, 54) ein CCD-Array, ein CMOS-Array oder ein PSD-Element umfasst.
